(19) Europäisches Patentamt
European Patent Office
Office européen des brevets

(11) **EP 3 716 223 B1**

(12) **EUROPEAN PATENT SPECIFICATION**

(45) Date of publication and mention
of the grant of the patent:
**21.02.2024 Bulletin 2024/08**

(21) Application number: **20162331.1**

(22) Date of filing: **11.03.2020**

(51) International Patent Classification (IPC):
**G07C 5/00** *(2006.01)* **G07C 5/08** *(2006.01)*

(52) Cooperative Patent Classification (CPC):
**G07C 5/008; G07C 5/08;** G07B 15/063

(54) **VEHICLE DATA COLLECTION SYSTEM AND METHOD**

FAHRZEUGDATENERFASSUNGSSYSTEM UND -VERFAHREN

SYSTÈME ET PROCÉDÉ DE COLLECTE DE DONNÉES DE VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.03.2019 ES 201900045**

(43) Date of publication of application:
**30.09.2020 Bulletin 2020/40**

(73) Proprietor: **Seat, S.A.**
**08760 Martorell (ES)**

(72) Inventors:
• **MORENO PAREJO, Alejandro**
**08760 Martorell, Barcelona (ES)**
• **LECEA ALAYO, José María**
**08760 Martorell, Barcelona (ES)**
• **ILIJEVIC, Stefan**
**08760 Martorell, Barcelona (ES)**

(74) Representative: **Elzaburu S.L.P.**
**Edificio Torre de Cristal**
**Paseo de la Castellana 259 C, planta 28**
**28046 Madrid (ES)**

(56) References cited:
**US-A1- 2004 198 466    US-A1- 2006 052 918
US-A1- 2013 151 038**

**Description**

**Object of the invention**

The object of the present invention relates to a vehicle data collection system and method that enables data to be collected from sensors located in vehicles, preferably when said vehicles are parked.

The vehicle data collection system and method object of the present invention has special application in the field of the automobile industry, as well as in the field of data collection for statistical purposes, being of interest to the entire "big data" industry.

**Background of the invention and technical problem to be solved**

At present, a large part of the car park remains immobilized most of the time. Vehicle owners use their vehicles on a daily basis to travel, for example, to their workplace, leaving the vehicle parked during most hours of the day.

Apart from the ecological issues that this fact may raise, the question arises as to whether it would be possible to obtain a better performance from said car park, underused for a large part of the useful life thereof.

Therefore, this leads to the approach of providing vehicles with additional utilities or features, which make it possible to use these vehicles during the periods when they are parked.

Additionally, vehicles have a greater number of comfort and security systems, which require information related to the parked vehicle. Therefore, this leads to the approach of optimizing the use of said information in order to minimize battery consumption in each one of the vehicles that remain parked.

Document US 2013151038 A1 is known from the prior art. This document relates to a remote starter that transmits vehicle position information at a time of parking start to an information processor, where the information processor judges whether to transit a request for starting the vehicle based on the vehicle position and on mobile-terminal position.

Document US 2004198466 A1 is also known from the prior art. This document relates to a method of operating a telematics device which includes a control unit communicating an ignition status of a vehicle to a wireless device, which in turn determines if a low-power mode is available.

Furthermore, document US 2006052918 A1 is also known. This document relates to a control and diagnostics system and method for vehicles. This method and apparatus allow performing a remote diagnosis of motorized vehicles.

**Description of the invention**

In order to solve the aforementioned drawbacks, the present invention relates to a vehicle data collection method according to independent claim 1, a computer implemented program according to claim 9 and a vehicle data collection system according to independent claim 10.

The present invention preferably applies to vehicles which are parked.

According to alternative or complementary embodiments, the sending of data by the control module towards the remote server is carried out based on the activation signal (indicative of the parking start of the vehicle) and/or based on a request by the remote server to send at least one item of vehicle data, so that the sending of data occurs only during specific instants in time, enabling the use of the vehicle battery to be minimized while the vehicle is parked.

According to a preferred embodiment of the vehicle data collection system, once the parking start has been detected (therefore, the vehicle's engine is turned off), the supply power module maintains electrical power during the time necessary to receive information from the modules and send it to the external server.

The supply power module is configured to:

  ◦ permanently provide electrical power to the control module and the communication module, and;

  ◦ provide electrical power to the positioning module, the data collection module and the at least one sensor, only upon express instruction by the control module.

The remote server is configured to collate the detected position of the vehicle with a zoning plan of parking spaces, and classify the plurality of vehicles from the parked vehicle database based on the parking area.

The control module is configured to send to the remote server, via the communication module, data related to:

  ◦ a typology of the at least one sensor, and;

  ◦ an operating status of the at least one sensor.

According to possible embodiments, the vehicle data collection system incorporates a plurality of sensors in the vehicle among which there is any combination of at least the following types of sensors:

- sensor of the temperature outside the vehicle;

- sensor of the concentration of polluting substances in the air outside the vehicle;

- sensor of air humidity outside the vehicle;

- video camera, for recording images outside the vehicle, and;

- microphone, for sound recording in the vicinity of the vehicle.

According to a possible embodiment, the vehicle data collection method comprises sending, by the control module to the remote server, a typology of the at least one sensor and an operating status (operative or inoperative/defective) of the at least one sensor, and checking, by the remote server, the typology of the at least one sensor, and the operating status of the at least one sensor. According to this embodiment, the vehicle data collection method comprises sending, by the control module to the remote server, the operating status of the at least one sensor, and checking, by the remote server, the operating status of the at least one sensor.

According to a possible embodiment, the vehicle data collection method comprises comparing, by the remote server, the vehicle position received with the position of the plurality of vehicles in the parked vehicle database, and classifying the plurality of vehicles in the parked vehicle database based on their relative position with respect to the other vehicles registered in the database. In this way, the server can group the vehicles by proximity, that is, by distance from each other.

According to another possible embodiment, the vehicle data collection method comprises collating, by the remote server, the vehicle position detected with a zoning plan of parking spaces, and classifying the plurality of vehicles from the parked vehicle database based on the parking area. This is now compared to a map, such that it is known with more accuracy whether the vehicles are parked in the same area or parking, or in a different one.

According to the method of the present invention, vehicles with a battery level below a certain threshold:

- they do not receive data requests.

Preferably, the vehicle data collection method comprises requesting to send at least one item of data, by the remote server to the control module of each vehicle, based on the calculated sequence of vehicles, wherein said request comprises requesting data relating to one or more of:

○ vehicle battery level;

○ position of the vehicle;

○ typology of the at least one sensor;

○ operating status of the at least one sensor, and;

○ measurement taken by the at least one sensor.

According to a possible embodiment of the data collection method, the frequency with which the remote server requests data from the vehicle is equal to the ratio between a first quantity and a second quantity. According to a possible embodiment:

- the first quantity is equal to the lower of maximum refresh periods for the vehicle's operative sensors, said maximum refresh periods being predetermined periods of time established for each type of sensor, and;

- the second quantity is equal to the number of vehicles registered in the parked vehicle database.

Likewise, preferably, the method comprises sending information to the remote server right when the vehicle engine starts, that is, when parking ends. The user starts the engine such that there is no longer any battery power consumption, and then data is sent.

By means of the vehicle data collection system and method described, the energy consumption of parked vehicles is minimized. In this way, it is avoided that said parked vehicles see their battery level drastically reduced due to multiple connections with the remote server, in order to send and receive information necessary for the proper operation of comfort systems and security systems that said vehicles integrate.

On the one hand, information is sent at specific times, taking advantage of the fact that the vehicle electronics are activated, i.e., when the parking start is detected and when the parking end is detected. Likewise, and only upon express request by the remote server, certain vehicle components are activated, at the request of the control module, in order to determine at least one item of vehicle data and send it to the remote server.

Also, the remote server is configured to update the databases with the information sent by parked vehicles, both the information related to the parking start of a vehicle, the information related to the parking end of a vehicle and/or to at least one item of data or parameter of the parked vehicle. This information will be used to generate a sequence of vehicles or an ordered list of vehicles from which to request to send at least one item of data of the parked vehicle. The objective of calculating the sequence of vehicles will be to "wake up" or activate the electronics of the vehicle that may have a lesser impact for the energy storage system or battery thereof. Thus, whenever information newly enters the remote server, the sequence of vehicles will be updated based on said new entry of information.

By means of the vehicle data collection system and method described above, the objective of having an updated database of parameters (e.g., temperature outside the vehicle or location index) is achieved. This information is updated from the vehicles parked in the area, so it is sought that they save energy by requesting information as few times as possible. This information can be used to, for example, decide a start time for pre-air conditioning the vehicle. Therefore, it will no longer be a vehicle unit that will calculate the parameters of the internal systems of the vehicle, but the calculation may be performed by an external or remote server to the vehicle based on the information sent by a plurality of parked vehicles. By means of this, the optimization and minimization of energy consumption of the parked vehicle is sought.

**Brief description of the figures**

As part of the explanation of at least one embodiment of the invention the following figures have been included.

Figure 1 shows a schematic view of the main constituent elements of the vehicle data collection system.

Figure 2 shows two tables relating to two examples of sequences according to which the remote server requests information from four parked vehicles.

Figure 3 shows three sequence-related tables according to which the remote server requests information from four parked vehicles.

Figure 4 shows a block diagram with the steps of a possible embodiment of the vehicle data collection method.

**Detailed description**

The present invention relates, as mentioned above, to a vehicle data collection system and method.
According to an embodiment of the vehicle data collection system, the system comprises:

- a supply power module (102);

- a control module (101);

- a positioning module (103);

- a data collection module (104), and;

- a communication module (105).

- The data collection module (104) is connected to one or more sensors (106) chosen from among at least the following:

- at least one sensor of the temperature outside the vehicle;

- at least one sensor of the humidity outside the vehicle, and;

- at least one sensor of the concentration of polluting substances outside the vehicle.

The data collection module (104) is bidirectionally connected to the control module (101). The data collection module (104) is equally connected to the supply power module (102), from which it receives electrical power.

The data collection module (104) is configured to be instructed by the control module (101) to perform a reading of the measurements of one or more sensors (106). Upon receipt of said instruction by the control module (101), the data collection module (104) performs a query to one or more sensors (106) and performs a reading of the measurements taken by said sensor(s) (106), and sends said reading to the control module (101).

The positioning module (103) is bidirectionally connected to the control module (101). The positioning module (103) is equally connected to the supply power module (102), from which it receives electrical power.

The positioning module (103) is configured to be instructed by the control module (101) to perform a measurement and a reading of the position of the vehicle. The positioning module (103) is configured to receive, by means of an antenna, a geolocation signal (e.g., a GPS signal) indicative of the geographical position of the vehicle. Upon receipt of said instruction by the control module (101), the positioning module (103) performs a measurement and/or a reading of the position of the vehicle, and sends said reading to the control module (101).

According to a possible embodiment of the vehicle data collection system, the positioning module (103) continuously performs a reading/measurement of the geographical position of the vehicle, and sends it to the control module (101) upon instruction by the control module (101). In this case, the supply power module (102) provides uninterrupted electrical power to the positioning module (103).

According to an alternative embodiment of the vehicle data collection system, the positioning module (103) performs a reading/measurement of the geographical position of the vehicle only when it receives a specific instruction from the control module (101), sending the result of said reading/measurement to the control module (101). In this case, the control module (101) sends instructions to the supply power module (102) to supply the positioning module (103), only when it wishes to obtain the reading of the geographical position of the vehicle.

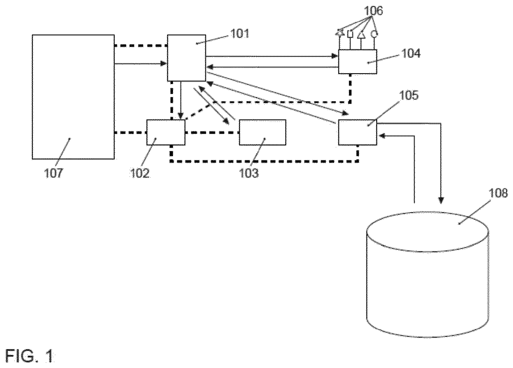

The supply power module (102) is configured to provide electrical power to the control module (101), the data collection module (104), the positioning module (103) and the communication module (105). To do this, the supply power module (102) is connected to the vehicle battery. The supply connection is represented by dashed lines in Figure 1, as opposed to the solid lines, which represent the data connections.

The vehicle battery in combination with the sensors (106) that interact with the data collection system object of the present invention are represented in Figure 1 as a box symbolizing the general architecture (107) of the vehicle.

The control module (101) is configured to:

- perform a reading of the vehicle battery level, for which it is connected to the vehicle battery;

- send instructions to the supply power module (102) so that the supply power module (102) provides electrical power to the various modules of the data collection system, for which it is connected to the supply power module (102);

- send to the communication module (105) the readings received from the data collection module (104) and the positioning module (103), for which it is bidirectionally connected to the communication module (105);

- be instructed by the communication module (105) so the data collection module (104) and the positioning module (103) perform readings, and for the control module (101) to receive said readings;

- receive an activation signal from the vehicle, and process said activation signal, to send an availability signal and a reading of the vehicle battery level to the communication module (105).

The activation signal may be chosen among at least:

- a switching off of the vehicle ignition;

- an extraction of the key from the vehicle ignition, and;

- a "non-presence" signal by at least one vehicle presence sensor (e.g., a weight sensor located in, at least, the vehicle driver's seat).

The communication module (105) is bidirectionally connected to the control module (101).
The communication module (105) is also connected to the supply power module (102), from which it receives electrical power.

The communication module (105) is configured to establish bidirectional communication between the control module (101) and a remote server (108), with which it is wirelessly and bidirectionally connected via 3G, 4G, 5G, GPRS, Wi-Fi connection or any other radio frequency connection.

The communication module (105) is configured to:

- receive an availability signal from the control module (101) and send that availability signal to the remote server (108);

- receive a battery level signal from the vehicle by the control module (101) and send said battery level signal to the remote server (108);

- receive a reading of the position of the vehicle by the control module (101) and send said reading to the remote server (108);

- receive a reading of at least one of the sensors (106) connected to the data collection module (104) and send said reading to the remote server (108), and;

- receive an order by the remote server (108) to perform a measurement and/or a reading by the sensors (106) and/or by the positioning module (103), and send said order to the control module ( 101).

As for the remote server (108), it is configured to create, store and update a database with all the vehicles in a certain car park.

Additionally, the remote server (108) is configured to create, store and update a database with all the vehicles in the car park that are parked at any given time.

Additionally, the remote server (108) is configured to create, store and update a database with all the vehicles in the car park that are parked in the sun or in uncovered parking spaces, and a database with all the vehicles of the car park that are in covered parking spaces.

In relation to the above, the remote server (108) is configured to create, store and update a database of parking spaces, with the definition of whether said spaces are covered or uncovered, and with the exact geographical location of said parking spaces.

The remote server (108) is configured to add a vehicle to the car park database, when the user or the manufacturer proceeds to register said vehicle on the server (108).

Any vehicle registered in the server (108) and belonging to the car park database will be able to be registered in the parked vehicle database, in the database of vehicles parked in uncovered parking spaces and in the database of vehicles parked in covered parking spaces.

The remote server (108) is configured to receive an availability signal from a vehicle, then registering said vehicle within the parked vehicle database.

Likewise, optionally, the remote server (108) is configured to receive an indication as to whether the parking space is covered or uncovered, then registering the vehicle in the database of vehicles parked in a covered parking space or in the database of vehicles parked in an uncovered parking space, respectively.

Alternatively to what is mentioned in the previous paragraph, the remote server (108) is configured to collate the information about the positioning of an available vehicle with the database of covered parking spaces and with the database of uncovered parking spaces, the server (108) determining by itself whether the vehicle is parked in a covered or an uncovered parking space, consequently registering the vehicle in the database of vehicles parked in a covered space or in the database of vehicles parked in an uncovered space, respectively.

The remote server (108) is also configured to receive and register the battery level of a vehicle registered in the parked vehicle database.

The remote server (108) is configured to send instructions to the control module (101) of a vehicle, so that the control module (101) sends the reading of at least one of the sensors (106) connected to the data collection module (104), and/or the reading of the geographical position of the vehicle performed by the positioning module (103), to the remote server (108).

Although the way the system operates by introducing the different components of the system one by one has already been explained, the operation of the system is explained in more detail below.

When a vehicle is parked, the user switches the ignition off, removes the ignition key, exits the vehicle and closes the door. Any of the above actions, detected by the corresponding sensor (or activation/deactivation indicator) on the ignition or on the vehicle seat, can act as an activation signal for the control module (101) of the system.

Upon this activation signal, the control module (101) performs a reading of the vehicle battery level and, by means of the positioning module (103), a reading of the geographical position of the vehicle, and sends to the server (108), via the communication module (105), an availability signal (or activation signal) of the vehicle together with a signal of the vehicle battery level and a signal indicative of the geographical position of the parking place.

In this way, the system server (108) can register the vehicle in the parked vehicle database and can also record the battery level thereof at the time of parking the vehicle.

The server (108) can also know exactly where the vehicle is parked and it can know whether the parking place corresponds to a covered or an uncovered parking space. The latter may be known by the server (108), for example, by collating the geographical parking position of the vehicle with a database (a plan) of the parking spaces associated with geographical positions and with an identifier about the covered or uncovered status of each parking space.

When the server (108) has identified the parked vehicle, the battery level and the condition of covered or uncovered parking space (which may be an indirect indication of whether the vehicle is parked in the sun or in the shade), the server (108) can send an order to the control module (101) of the vehicle so that the control module (101) consults the readings of one or more sensors (106) connected to the data collection module (104).

For example, the server (108) can send an order to the control module (101) so that it sends back the reading of a temperature sensor located outside the vehicle. Additionally or alternatively, the server (108) can send an order to the control module (101) so that it sends back the reading of a humidity sensor outside the vehicle. Alternatively or additionally, the server (108) can send an order to the control module (101) so that it sends back the reading of a sensor of the concentration of one or more substances (pollutants) that could be present in the air surrounding the vehicle.

In this way, the remote server (108) can periodically receive readings of vehicles parked at very different points, with environmental information about weather and environmental conditions.

The knowledge about whether a vehicle is parked in a covered or an uncovered parking space is of great interest, since this fact will be taken into account when interpreting whether the measured ambient temperature has been taken in the sun or in the shade, respectively.

In this way, a car park (which would otherwise be wasted) is used to send environmental and/or meteorological data to the remote server (108), providing information that can be very useful.

According to a preferred embodiment of the vehicle data collection system, the remote server (108) is configured to send to the control module (101) an order to read and/or send the reading of the sensors (106) every so often at predetermined time intervals.

Preferably, if a vehicle battery level is low, the remote server (108) will send to the control module (101) located in said vehicle an order to read and/or send the reading of the sensors (106) with less frequency than if the battery level of said vehicle were high.

Likewise, depending on the type of reading or type of sensor (temperature, humidity, concentration of substances in the air), the remote server (108) will require that said reading is updated with a given frequency.

Thus, for example, the remote server (108) is preferably configured to update the concentration value of substances (for example, nitrogen oxides, NOx) in the air in a given area every hour; on the contrary, as for the temperature value, the remote server (108) is preferably configured to update the temperature value in a given area every two hours. As for the relative humidity value, the remote server (108) is configured to update the relative humidity value in a given area every four hours.

To update the reading value taken by a given type of sensor in a given area, the remote server (108) takes into account the number of cars parked in that particular area.

If, for example, the remote server (108) requires updating the concentration value of substances in the air in a given area every hour, said server will check the concentration of substances in the air, after one hour has elapsed since the last consultation, on a different vehicle than the one previously consulted.

Thus, if there are four parked vehicles in a given area, each vehicle will be consulted about the concentration of substances in the air read by the sensor of the concentration of substances in the air every four hours.

Obviously, the remote server (108) keeps updating the number of vehicles available in a given area in the database thereof, such that, at a given time, the frequency with which each vehicle is consulted by the server (108) about a given reading of a given sensor (106) may increase or decrease, depending on whether the number of available vehicles parked in a given area decreases or increases, respectively.

According to a possible embodiment, when the remote server (108) sends instructions to the control module (101) to perform a reading by a given sensor (for example, the temperature sensor), the control module (101) sends instructions to the data collection module (104) so that the data collection module (104) activates only the sensor (106) that requires the reading (e.g., the temperature sensor), and not the rest of sensors (106) connected to the data collection module (104). In this sense, when it is said that the data collection module (104) activates a sensor (106), reference is being made to said sensor (106) being energized by the supply power module (102) and via the data collection module (104), only during the time that said activation lasts, such that the energy consumption decreases with respect to a case in which all sensors (106) were permanently energized.

Each time the remote server (108) sends instructions to the control module (101) for it to obtain the reading of a sensor (106) and send it back to the server (108), the control module (101) also carries out a reading of the vehicle battery level and returns said reading to the server (108), so that the server (108) has the updated value of the battery level of the parked vehicle at all times.

The server (108) generates a sequence (406) of vehicles, in order to determine a list or sequence of parked vehicles from which to request information, such as a vehicle battery level, a position of the parked vehicle, at least one parameter of the parked vehicle, among others. In this way, the server (108) complements and updates information of the at least one database with data sent by the plurality of parked vehicles, selecting at every moment the parked vehicle from which to request information and establishing a sending request order of information that allows, on the one hand, to keep these databases correctly updated, such as minimizing the energy consumption of parked vehicles.

The server (108) preferably consults the readings of sensors (106) located in vehicles whose battery level is higher. Preferably, those vehicles whose battery level is lower are consulted less frequently. Eventually, if the battery level of a vehicle drops below a certain threshold, the remote server (108) will not send instructions to the control module (101) located in that vehicle. This avoids consuming the vehicle battery in excess during the parking time.

According to one embodiment, the control module (101) communicates the parking end of said vehicle to the remote server (108). Additionally, taking advantage of the fact that the vehicle electronics are activated, the control module (101) further sends at least one item of data or parameter related to said vehicle to the remote server (108). Thus, although the remote server (108) did not envisage the reception of information by the plurality of parked vehicles, it updates the information in the databases and it further updates the list or sequence of vehicles based on the information received by said vehicle.

When a vehicle is no longer parked, a deactivation signal is sent to the control module (101), which sends a "non-availability" signal (or deactivation signal) to the remote server (108), so that the remote server (108) deregisters the vehicle from the parked vehicle database. The mentioned deactivation signal sent to the control module (101) is given by a sensor in the ignition or in the vehicle seat, so that it detects if the key has been inserted in the ignition, if the vehicle has been started or if a user has sat in a driver's seat of a vehicle.

When the remote server (108) registers or deregisters a vehicle from the parked vehicle database, the remote server (108) calculates the sequence or order of vehicles to which reading information of their respective sensors (106) will be requested.

For the establishment of the order or sequence of vehicles, the remote server (108) takes into account which vehicles are registered in the parked vehicle database, the battery level of each vehicle and the sensors (106) available (as well as the condition of said sensors) for each vehicle, since, eventually, not all parked vehicles will have the same sensors (106) and/or not all vehicles have their sensors (106) in good condition. Those vehicles that lack a given type of sensor (106), or that have said sensor (106) but in poor condition, are not taken into account by the remote server (108) when establishing the consultation order or sequence of the vehicles.

The server (108) stores in a database information related to the identifier of each vehicle registered in the parked vehicle database, as well as information related to the type of sensors (106) and the condition (good/correct or bad/defective) of the sensors (106) of said vehicle. Said information can be accessed by using the vehicle identifier that the server (108) has received.

The control module (101) instructs the supply power module (102) to supply the data collection module (104) (and, through the data collection module (104), the corresponding sensor(s) (106)) only when the control module (101) receives, via the communication module (105), an instruction by the server (108) to perform a reading of a sensor (106). In these cases, the control module (101) sends instructions to the supply power module (102) to feed the data collection module (104) (and, through the data collection module (104), to the corresponding sensor(s) (106) for a predetermined time interval, or until the control module (101) receives the reading of the sensor (106) from the data collection module (104). As long as no reading instruction is received from the server (108), the control module (101) does not send any instructions to the supply power module (102) for the supply power module (102) to supply the data collection module (104).

The supply power module (102) and, by means of this, both the communication module (105) and the control module (101) are always powered by a part of the vehicle battery.

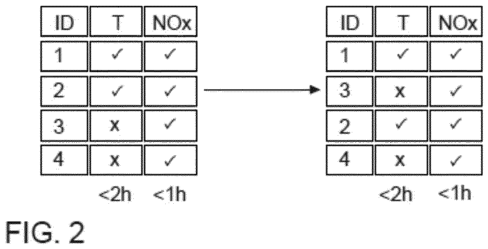

Figure 2 shows two tables related to two examples of sequences according to which the remote server (108) requests information from four parked vehicles, paying attention to the type of sensors (106) and the condition of said sensors (106). In both examples, the four vehicles have a sensor of the concentration of nitrogen oxides (NOx) in the air. Two vehicles have a temperature sensor in good condition, and the other two vehicles do not have a temperature sensor in good condition (either because of not having a temperature sensor at all, or because of having it, but in a defective/inoperative condition).

In the first example (table on the left of Figure 2), there are two vehicles without a temperature sensor (or with a temperature sensor in a defective state) from which information is requested consecutively. This has the drawback that, for a long period of time, the server (108) does not receive temperature-related information.

The second example (table on the right of Figure 2) shows a more effective sequence, wherein the time in which there is no information about the temperature is shorter.

Figure 2 indicates that the maximum time interval in which the server (108) remains without requesting information (refresh rate) related to the temperature is two hours, while the maximum time interval in which the server (108) remains without requesting information (refresh rate) related to the concentration of polluting substances (NOx) in the air is one hour.

Starting from the situation in the first example mentioned above, the system could try to solve the drawback related to the absence (or poor condition) of temperature sensors in two of the vehicles by increasing the frequency with which it requests data from all vehicles, so as to ensure that the time interval in which the server (108) remains without receiving temperature information does not exceed the temperature refresh rate. However, this increase would mean higher battery consumption for the vehicles involved.

Therefore, a correct sequence (see second example, on the right) of vehicles taking into account the sensors (106) available in each vehicle increases the efficiency of the system in terms of vehicle battery savings, data traffic and system processing. In the second example, without increasing the frequency with which the server (108) requests data from the vehicles, and by means of an adequate sequence of vehicles, it is ensured that the time interval during which the server (108) remains without receiving information related to the temperature does not exceed the temperature refresh rate.

The frequency of requests for information from the vehicles depends directly on the shorter of the maximum refresh times of the sensors (106). Such that if the maximum refresh times of the sensors (106) are as follows:

- Temperature: 2 hours;

- Humidity: 4 hours, and;

- Concentration of polluting substances in the air: 1 hour;

the frequency of requests for information from the vehicles will be 1 h$^{-1}$ (one request for information every hour).

According to a preferred embodiment, except in exceptional situations such as low battery levels or system processing saturation (for example, in cases where the server (108) is saturated), when an information request is made to the system, all the data from all the sensors (106) of interest for the situation are requested, although their frequency does not require it. In other words, in the second example mentioned above, temperature and humidity information would be requested every hour. This has the advantage, among others, that in the event that for some reason data cannot be acquired at some instant, the system always has the most current data possible.

According to the above, a vehicle will be "awakened" with the frequency (f) indicated in the following formula:

$$f = \frac{the\ lower\ of\ the\ maximum\ refresh\ times\ for\ information}{number\ of\ vehicles\ in\ the\ database}$$

Taking into account the two examples mentioned above, the maximum refresh rate for information (for requesting information or "waking up" each vehicle) should be 1 h$^{-1}$.

However, the first sequence (in the first example) implied that there was no temperature-related information for 3 hours, which exceeds the maximum refresh time for receiving information about temperature from the server (108), being then necessary to increase the frequency of requests for information. On the contrary, the second sequence (second example) does meet the maximum refresh times of both sensors (temperature and concentration of pollutants), by means of a frequency of requests for information from each vehicle of 1 h$^{-1}$.

However, it may be the case that, even when performing the most effective sequence, there are times when there is no necessary information from a sensor. For this, there are two options.

- The first option is to increase the refresh rate punctually, making an additional request when the maximum refresh time of a sensor's information is reached.

- The second option is to perform a sequence such that some selected vehicles are awakened more frequently than others.

The second option has an advantage in terms of system processing and data traffic, although it penalizes the battery level of said chosen vehicles with respect to the others not chosen ones. The most efficient solution will depend on the conditions at any given time.

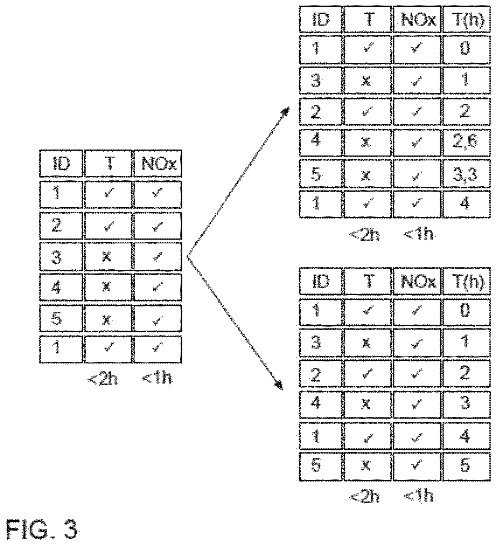

Figure 3 shows three tables that give examples of what has just been explained.

A first table is shown on the left, analogous to the first example in Figure 2. This table shows a possible sequence by means of which the server (108) consults the data of temperature sensors and sensors of the concentration of pollutants in the air for five parked vehicles, numbered from 1 to 5, until the vehicle number 1 is consulted again. As already described in the first example of Figure 2, this sequence has the drawback that, when consecutively consulting vehicles whose temperature sensor is defective (or vehicles that may not even have such sensor), the predetermined maximum refresh time for the server (108) to update the temperature data is exceeded.

A second table on the upper right part of Figure 3 shows a sequence that intends to solve the problem mentioned above. This table has been developed trying to establish a more efficient sequence of vehicle consultation, analogous to the second example in Figure 2. It can be seen how, even using this more efficient sequence, after requesting temperature information from vehicle number 2, temperature information is not recorded again until vehicle number 1 is consulted again, after three hours. This does not meet the maximum refresh time requirements for the information of this sensor. Therefore, with this sequence, it would be necessary to increase the frequency at that point. Column T(h) shows, in hours, how often each item of data is requested.

A third table on the lower right part of Figure 3 shows where the order of vehicles has been modified, such that the vehicles with a greater amount of available sensors (106) are asked more often for information. In this specific case, the table shows a sequence according to which vehicle number 1 is consulted more frequently than the others.

Once the server (108) has generated an effective sequence of vehicles and assigned an information request time for each vehicle, the system will be ruled by this table until a vehicle is added or leaves that database. In that case, a new calculation of a sequence will be conducted.

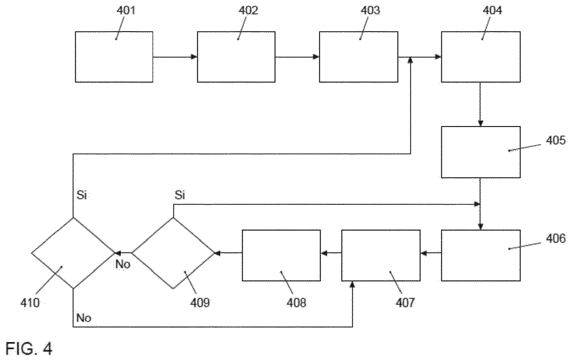

Figure 4 shows a block diagram illustrating the process of data collection by the vehicle data collection system object of the present invention.

At first, after detecting the parking (401) of the vehicle, the control module (101) detects the position (402) of the vehicle by means of the positioning module (103). Additionally, the control module (101) performs a reading of the vehicle battery level. Afterwards, the control module (101), by means of the communication module (105), sends to the remote server (108) the vehicle identifier, the position signal, the battery level and the availability signal thereof, and the remote server (108) proceeds to register (403) the vehicle in the parked vehicle database.

Hereafter, the remote server (108) performs a check (404) of the available sensors (106) of the vehicle, and of whether the parking space corresponds to a covered parking space or an uncovered parking space. Based on the foregoing, the remote server (108) assigns said vehicle to a zone database (405), either to a zone database of vehicles parked in uncovered parking spaces or to a zone database of vehicles parked in covered parking spaces.

Thereupon, taking into account the new vehicle registered in the zone database, the server (108) conducts a more appropriate calculation (or recalculation) of the most appropriate sequence (406) to consult each vehicle on the data read by its sensors.

Subsequently, the server (108) proceeds to consult (407) the parked vehicles according to the calculated sequence, and receive said data (408) from the sensors (106) of the vehicles and their entry in the corresponding register within the server (108).

The server (108) checks whether a vehicle has been deregistered (409), that is, if a vehicle has stopped being parked and has sent a "non-availability" signal to the server (108). If this is the case, the server (108) proceeds to recalculate the more appropriate sequence (406) to consult each vehicle on the data read by its sensors (106), taking into account the deregistration of the vehicle from the database.

The remote server (108) also checks whether there has been a new registration (410) of a new vehicle in the database. If this is not the case, the server (108) continues to carry out consultations on parked vehicles according to the established sequence; on the contrary, if it is verified that there has been a new registration of a new vehicle in the database, the remote server (108) proceeds to check (404) the available sensors (106) of the new vehicle, and checks whether the parking place corresponds to a covered parking space or an uncovered parking space. Based on the foregoing, the remote server (108) assigns said new vehicle to a zone database (405), either to a zone database of vehicles parked in uncovered parking spaces or to a zone database of vehicles parked in covered parking spaces.

Then, taking into account the new registered vehicle, the server (108) proceeds to recalculate the more appropriate sequence (406) to consult each vehicle on the data read by its sensors.

Although Figure 4 depicts the steps of checking the deregistration of vehicles (409) and checking the new registration of vehicles (410) consecutively, following the data reception step (408) by the server (108), these checks (409, 410) can be carried out at any time.

In addition to what has already been mentioned, the vehicle data collection system makes it possible to offer the following services.

Parking:

Using cameras and proximity sensors, the fleet of parked vehicles can detect if there are vehicles parked in the surroundings thereof and free parking spaces in the surroundings thereof. For this, it is essential to know the exact position and orientation of the vehicle, since depending on whether they are parked in parallel or perpendicularly, some sensors or others will be used for this (front/rear or side ones).

In addition to exact positioning and orientation of the vehicle, it is necessary to have exact maps, wherein it is known where the parking spaces are located. For example, if there was a free space in front of a vehicle but this space corresponded to an exit for vehicles, the system could not propose it as a free parking space.

Thus, an updated database of free parking spaces is calculated and information on said free parking spaces can be provided to third parties.

Traffic:

Using cameras and proximity sensors, the fleet of parked vehicles can detect the frequency and speed at which vehicles move in the surroundings thereof. For this, it is essential to know the exact position and orientation of the vehicle, since depending on whether they are parked in parallel or perpendicularly, some sensors or others will be used for this (front/rear or side ones).

Thus, an updated database with updated information on traffic density is calculated.

Meteorology:

By using sensors such as rain sensors, sensors of the temperature inside the vehicle, sensors of the temperature outside the vehicle, light sensors, pollution sensors, etc., very relevant weather data can be acquired. For this, it is essential to know the exact location of the vehicle, since the information of a vehicle parked inside a garage is not relevant. Likewise, as already introduced throughout this description, the temperature measured by vehicles parked in the shade and under the sun provides very different information (degrees in the shade, degrees in the sun).

Thus, an updated database with information on meteorological data or updated weather phenomena is calculated which can be used by comfort systems of parked vehicles themselves, as well as by third parties.

Anti-theft device:

The presence of people in parking lots can be regularly checked by using cameras or proximity sensors of parked vehicles. For this, the server consults the readings of the sensors (cameras) of the vehicles parked in the car park following such a sequence that it prevents vehicles parked one after the other, with similar appearance, from being "awakened", to be able to better cover the coverage of the area to be monitored.

In the case of detecting the presence of people, the surrounding vehicles can activate monitoring systems around the vehicle.

Density and people detection:

Using the cameras of the vehicles, the number of people who go in one direction at different times of the day can be detected. Furthermore, with facial recognition and artificial intelligence software, the traits of these people can be recognized (age range, gender, etc.).

**Claims**

1.  A vehicle data collection method comprising:

    ◦ detecting a vehicle parking start (401) by means of an activation/deactivation indicator of the vehicle connected to a control module (101);
    ◦ detecting the position (402) of the vehicle by means of a positioning module (103) located in the vehicle and connected to the control module (101), based on the parking start detected;
    ◦ detecting at least one parameter of the vehicle by means of at least one sensor (106) of the vehicle connected to the control module (101) via a data collection module (104), based on the parking start detected;
    ◦ consulting, by means of the control module (101), the vehicle battery level;
    ◦ sending to a remote server (108), from the control module (101) located in the vehicle and via a communication module (105) connected to the control module (101):

        ▪ an activation signal, said activation signal being indicative of the vehicle parking start;
        ▪ an item of data relating to a vehicle identifier;

- the position of the vehicle;
- the at least one parameter of the vehicle, and;
- an item of data relating to the battery level of the vehicle;

○ registering (403) the vehicle, by the remote server (108), in a parked vehicle database;
○ calculating a sequence (406) of vehicles, wherein the sequence of vehicles comprises an ordered list of vehicles from which to request (407), from the remote server (108) towards the respective control modules (101), to send at least one item of vehicle data, wherein the sequence is calculated based on the vehicle battery level; wherein if the vehicle battery level is below a certain threshold, the remote server (108) does not send instructions to the control module (101) located in that vehicle to send items of vehicle data;

wherein the sequence (406) of vehicles is updated by the remote server (108) with information sent from each vehicle at the parking start and at the parking end of a vehicle.

2. The vehicle data collection method according to claim 1, **characterized in that** it comprises sending, by the control module (101) to the remote server (108), a typology of the at least one sensor (106) and an operating status of the at least one sensor (106), and checking (404), by means of the remote server (108), the typology of the at least one sensor (106), and the operating status of the at least one sensor (106).

3. The vehicle data collection method according to claim 1, **characterized in that** it comprises sending, by means of the control module (101) to the remote server (108), an operating status of the at least one sensor (106), and checking (404), by means of the remote server (108), the operating status of the at least one sensor (106).

4. The vehicle data collection method according to any of claims 1 to 3, **characterized in that** it comprises comparing, by the remote server (108), the vehicle position received with the position of the plurality of vehicles in the parked vehicle database, and classifying the plurality of vehicles in the parked vehicle database based on their relative position with respect to the other vehicles registered in the database.

5. The vehicle data collection method according to any of claims 1 to 4, **characterized in that** it comprises collating, by the remote server (108), the vehicle position detected with a zoning plan of parking spaces, and classifying the plurality of vehicles from the parked vehicle database based on the parking area.

6. The vehicle data collection method according to any of claims 1 to 5, **characterized in that** it comprises requesting (407), based on the calculated sequence of vehicles, and from the remote server (108) to the control module (101) of each vehicle, to send at least one item of data, wherein said request (407) comprises the request for data relating to one or more of:

○ vehicle battery level;
○ position of the vehicle;
○ typology of the at least one sensor (106);
○ operating status of the at least one sensor (106), and;
○ measurement taken by the at least one sensor (106).

7. The vehicle data collection method according to claim 6, **characterized in that** the frequency with which data is requested (407) from the vehicle is equal to the ratio between a first quantity and a second quantity.

8. The vehicle data collection method according to any of claims 1 to 7, **characterized in that** it comprises sending to the remote server, from the control module (101) located in the vehicle and via a communication module (105) connected to the control module (101):

- a deactivation signal, said deactivation signal being indicative of the parking end of the vehicle;
- an item of data relating to a vehicle identifier;
- the position of the vehicle, and;
- the at least one parameter of the vehicle.

9. A computer implemented program **characterised in that** it comprises instructions for executing the method according to any of claims 2 to 8.

**10.** A vehicle data collection system comprising:

- a control module (101);
- a supply power module (102), configured to connect to a vehicle battery;
- a positioning module (103) configured to determine a position of the vehicle, bidirectionally connected to the control module (101);
- a data collection module (104), bidirectionally connected to the control module (101) and connected to at least one sensor (106) configured to determine at least one parameter of the vehicle;
- a communication module (105), bidirectionally connected to the control module (101), and;
- a remote server (108);

wherein the supply power module (102) is configured to provide electrical power to the control module (101), the positioning module (103), the communication module (105), the data collection module (104) and the at least one sensor (106);

wherein the control module (101) is configured to connect to an activation/deactivation indicator of the vehicle, wherein the activation/deactivation indicator is configured to generate and send activation/deactivation status signals to the control module (101) based on, respectively, the parking start of the vehicle and the parking end of the vehicle, wherein the communication module (105) is configured to connect bidirectionally with the remote server (108);

wherein the control module (101) is configured to connect to the vehicle battery to perform a reading of the vehicle battery level;

wherein the control module (101) is configured to:

○ receive a request to send at least one item of vehicle data from the remote server (108) via the communication module (105), and;
○ send to the remote server (108), via the communication module (105), data related to:

- vehicle activation/deactivation;
- vehicle identifier;
- vehicle positioning, and;
- measurements taken by the at least one sensor (106), and;
- the vehicle battery level;

wherein the sending of data to the remote server (108) is based on the status signal of the parking start of the given vehicle and based on the request received from the remote server (108) to send at least one item of vehicle data;

wherein the request to send at least one item of vehicle data is generated based on the sequence (406) of vehicles calculated according to the vehicle data collection method of any of the claims 1 to 8.

**11.** The vehicle data collection system according to claim 10, **characterized in that** the supply power module (102) is configured to:

○ permanently provide electrical power to the control module (101) and the communication module (105), and;
○ provide electrical power to the positioning module (103), the data collection module (104) and the at least one sensor (106), only upon express instruction by the control module (101).

**12.** The vehicle data collection system according to any of the claims 10 or 11, **characterized in that** the remote server (108) is configured to collate, by the remote server (108), the vehicle position detected with a zoning plan of parking spaces, and classifying the plurality of vehicles from the parked vehicle database based on the parking area.

**13.** The vehicle data collection system according to any of the claims 10 to 12, **characterized in that** the control module (101) is configured to send to the remote server (108), via the communication module, data related to (105):

○ a typology of the at least one sensor (106), and;
○ an operating status of the at least one sensor (106).

**Patentansprüche**

1.  Fahrzeugdatenerfassungsverfahren, umfassend:

    o Erkennen eines Fahrzeugparkbeginns (401) mittels eines Aktivierungs- /Deaktivierungsindikators des Fahrzeugs, der mit einem Steuermodul (101) verbunden ist;
    o Erkennen der Position (402) des Fahrzeugs mittels eines Positionierungsmoduls (103), das sich in dem Fahrzeug befindet und mit dem Steuermodul (101) verbunden ist, basierend auf dem erfassten Parkbeginn;
    o Erkennen mindestens eines Parameters des Fahrzeugs mittels mindestens eines Sensors (106) des Fahrzeugs, der über ein Datenerfassungsmodul (104) mit dem Steuermodul (101) verbunden ist, basierend auf dem erfassten Parkvorgangsstart;
    o Abfragen, mittels des Steuermoduls (101), des Fahrzeugbatterieladezustand;
    o Senden von dem im Fahrzeug befindlichen Steuermodul (101) und über ein mit dem Steuermodul (101) verbundenes Kommunikationsmodul (105) an einen entfernten Server (108):

    - eines Aktivierungssignals, wobei das Aktivierungssignal indikativ für den Fahrzeugparkbeginn ist;
    - eines Datenelements, das sich auf eine Fahrzeugkennung bezieht;
    - der Position des Fahrzeugs;
    - des mindestens einen Parameters des Fahrzeugs, und
    - eines Datenelements über den Batterieladezustand des Fahrzeugs;

    ○ Registrieren (403) des Fahrzeugs, durch den entfernten Server (108), in einer Datenbank für geparkte Fahrzeuge;
    o Berechnen einer Reihenfolge (406) von Fahrzeugen, wobei die Sequenz von Fahrzeugen eine geordnete Liste von Fahrzeugen umfasst, von denen der entfernte Server (108) die jeweiligen Steuermodule (101) auffordert (407), mindestens ein Element von Fahrzeugdaten zu senden, wobei die Reihenfolge basierend auf dem Fahrzeugbatterieladezustands berechnet wird; wobei, wenn der Fahrzeugbatterieladezustand unter einem bestimmten Schwellenwert ist, der entfernte Server (108) keine Anweisungen an das Steuermodul (101) sendet, das sich in diesem Fahrzeug befindet, um Elemente von Fahrzeugdaten zu senden;

    wobei die Reihenfolge (406) der Fahrzeuge durch den entfernten Server (108) mit Informationen aktualisiert wird, die von jedem Fahrzeug an dem Parkbeginn und an dem Parkende eines Fahrzeugs gesendet werden.

2.  Fahrzeugdatenerfassungsverfahren nach Anspruch 1, **dadurch gekennzeichnet, dass** es ein Senden, durch das Steuermodul (101) an den entfernten Server (108), einer Typologie des mindestens einen Sensors (106) und eines Betriebsstatus des mindestens einen Sensors (106) und ein Überprüfen (404), mittels des entfernten Servers (108), der Typologie des mindestens einen Sensors (106) und des Betriebsstatus des mindestens einen Sensors (106) umfasst.

3.  Fahrzeugdatenerfassungsverfahren nach Anspruch 1, **dadurch gekennzeichnet, dass** es ein Senden, mittels des Steuermoduls (101) an den entfernten Server (108), eines Betriebszustands des mindestens einen Sensors (106) und ein Überprüfen (404), mittels des entfernten Servers (108), des Betriebszustands des mindestens einen Sensors (106) umfasst.

4.  Fahrzeugdatenerfassungsverfahren nach einem der Ansprüche 1 bis 3, **dadurch gekennzeichnet, dass** es ein Vergleichen, durch den entfernten Server (108), der empfangenen Fahrzeugposition mit der Position der Vielzahl von Fahrzeugen in der Datenbank für geparkte Fahrzeuge und ein Klassifizieren der Vielzahl von Fahrzeugen in der Datenbank für geparkte Fahrzeuge basierend auf ihrer relativen Position in Bezug auf die anderen Fahrzeuge umfasst, die in der Datenbank registriert sind.

5.  Fahrzeugdatenerfassungsverfahren nach einem der Ansprüche 1 bis 4, **dadurch gekennzeichnet, dass** es ein Abgleichen, durch den entfernten Server (108), der erfassten Fahrzeugposition mit einem Zonenplan von Parkplätzen und ein Klassifizieren der Vielzahl von Fahrzeugen aus der Datenbank geparkter Fahrzeuge basierend auf dem Parkbereich umfasst.

6.  Fahrzeugdatenerfassungsverfahren nach einem der Ansprüche 1 bis 5, **dadurch gekennzeichnet, dass** es basierend auf der berechneten Reihenfolge von Fahrzeugen und von dem entfernten Server (108) an das Steuermodul (101) jedes Fahrzeugs, die Aufforderung (407) umfasst, mindestens ein Datenelement zu senden, wobei die Aufforderung (407) die Anforderung von Daten umfasst, die sich auf eines oder mehrere von Folgenden beziehen:

- o Fahrzeugbatterieladezustand;
- o Position des Fahrzeugs;
- o Typologie des mindestens einen Sensors (106);
- o Betriebszustand des mindestens einen Sensors (106), und;
- o Messungen, die von dem mindestens einen Sensor (106) vorgenommen werden.

**7.** Fahrzeugdatenerfassungsverfahren nach Anspruch 6, **dadurch gekennzeichnet, dass** die Häufigkeit, mit der Daten vom Fahrzeug angefordert werden (407), gleich wie das Verhältnis zwischen einer ersten Menge und einer zweiten Menge ist.

**8.** Fahrzeugdatenerfassungsverfahren nach einem der Ansprüche 1 bis 7, **dadurch gekennzeichnet, dass** es ein Senden von dem Steuermodul (101), das sich in dem Fahrzeug befindet und über ein Kommunikationsmodul (105), das mit dem Steuermodul (101) verbunden ist, von Folgendem an den entfernten Server umfasst:

- eines Deaktivierungssignals, wobei das Deaktivierungssignal indikativ für das Parkende des Fahrzeugs ist;
- eines Datenelements, das sich auf eine Fahrzeugkennung bezieht;
- der Position des Fahrzeugs, und;
- des mindestens einen Parameters des Fahrzeugs.

**9.** Computerimplementiertes Programm, **dadurch gekennzeichnet, dass** es Anweisungen zum Ausführen des Verfahrens nach einem der Ansprüche 2 bis 8 umfasst.

**10.** Fahrzeugdatenerfassungsverfahren, umfassend:

- ein Steuermodul (101);
- ein Stromversorgungsmodul (102), das konfiguriert ist, um mit einer Fahrzeugbatterie verbunden zu sein;
- ein Positionierungsmodul (103), das konfiguriert ist, um eine Position des Fahrzeugs zu bestimmen und bidirektional mit dem Steuermodul (101) verbunden ist;
- ein Datenerfassungsmodul (104), das bidirektional mit dem Steuermodul (101) verbunden ist und mit mindestens einem Sensor (106) verbunden ist, der konfiguriert ist, um mindestens einen Parameter des Fahrzeugs zu bestimmen;
- ein Kommunikationsmodul (105), das bidirektional mit dem Steuermodul (101) verbunden ist, und
- einen entfernten Server (108);

wobei das Stromversorgungsmodul (102) konfiguriert ist, um das Steuermodul (101), das Positionierungsmodul (103), das Kommunikationsmodul (105), das Datenerfassungsmodul (104) und den mindestens einen Sensor (106) mit Strom zu versorgen;

wobei das Steuermodul (101) konfiguriert ist, um mit einem Aktivierungs-/Deaktivierungsindikator des Fahrzeugs verbunden zu sein, wobei der Aktivierungs-/Deaktivierungsanzeiger konfiguriert ist, um Aktivierungs-/Deaktivierungszustandssignale zu erzeugen und an das Steuermodul (101) zu senden, die jeweils auf dem Parkbeginn des Fahrzeugs bzw. dem Parkende des Fahrzeugs basieren, wobei das Kommunikationsmodul (105) konfiguriert ist, um bidirektional mit dem entfernten Server (108) verbunden zu sein;

wobei das Steuermodul (101) konfiguriert ist, um mit der Fahrzeugbatterie verbunden zu sein, um ein Ablesen des Fahrzeugbatterieladezustands durchzuführen;

wobei das Steuermodul (101) zu Folgendem konfiguriert ist:

o Empfangen einer Anforderung zum Senden von mindestens einem Element von Fahrzeugdaten von dem entfernten Server (108) über das Kommunikationsmodul (105), und
o Senden, über das Kommunikationsmodul (105), von Daten an den entfernten Server (108), die sich auf Folgendes beziehen:

- Aktivierung/Deaktivierung des Fahrzeugs;
- Fahrzeugkennung;
- Fahrzeugpositionierung, und
- Messungen, die von dem mindestens einen Sensor (106) vorgenommen werden, und

▪ den Fahrzeugbatterieladezustand;

wobei das Senden von Daten an den entfernten Server (108) auf dem Zustandssignal des Parkbeginns des gegebenen Fahrzeugs und auf der von dem entfernten Server (108) empfangenen Aufforderung basiert, mindestens ein Element von Fahrzeugdaten zu senden;

wobei die Aufforderung zum Senden mindestens eines Fahrzeugdatenelements basierend auf der Reihenfolge (406) von Fahrzeugen erzeugt wird, die gemäß dem Fahrzeugdatenerfassungsverfahren nach einem der Ansprüche 1 bis 8 berechnet wird.

11. Fahrzeugdatenerfassungssystem nach Anspruch 10, **dadurch gekennzeichnet, dass** das Stromversorgungsstrommodul (102) zu Folgendem konfiguriert ist:

o dem Steuermodul (101) und dem Kommunikationsmodul (105) permanent Strom bereitzustellen, und
o dem Positionierungsmodul (103), dem Datenerfassungsmodul (104) und dem mindestens einen Sensor (106) nur auf ausdrückliche Anweisung des Steuermoduls (101) Strom bereitzustellen.

12. Fahrzeugdatenerfassungssystem nach einem der Ansprüche 10 oder 11, **dadurch gekennzeichnet, dass** der entfernte Server (108) konfiguriert ist, um durch den entfernten Server (108), die erfasste Fahrzeugposition mit einem Zonenplan von Parkplätzen abzugleichen und die Vielzahl von Fahrzeugen aus der Datenbank geparkter Fahrzeuge basierend auf dem Parkbereichs zu klassifizieren.

13. Fahrzeugdatenerfassungssystem nach einem der Ansprüche 10 bis 12, **dadurch gekennzeichnet, dass** das Steuermodul (101) konfiguriert ist, um über das Kommunikationsmodul (105) Daten an den entfernten Server (108) zu senden, die sich auf Folgendes beziehen:

o eine Typologie des mindestens einen Sensors (106), und
o einen Betriebszustand des mindestens einen Sensors (106).


**Revendications**

1. Procédé de collecte de données de véhicule, comprenant les étapes ci-dessous consistant à :

o détecter un début de stationnement de véhicule (401) au moyen d'un indicateur d'activation/désactivation du véhicule connecté à un module de commande (101) ;
o détecter la position (402) du véhicule au moyen d'un module de positionnement (103) situé dans le véhicule et connecté au module de commande (101), sur la base du début de stationnement détecté ;
o détecter au moins un paramètre du véhicule au moyen d'au moins un capteur (106) du véhicule connecté au module de commande (101) par l'intermédiaire d'un module de collecte de données (104), sur la base du début de stationnement détecté ;
o consulter, au moyen du module de commande (101), le niveau de batterie de véhicule ;
o envoyer, à un serveur distant (108), à partir du module de commande (101) situé dans le véhicule et par l'intermédiaire d'un module de communication (105) connecté au module de commande (101) :

▪ un signal d'activation, ledit signal d'activation étant indicatif du début de stationnement de véhicule ;
▪ un élément de données connexe à un identifiant de véhicule ;
▪ la position du véhicule ;
▪ ledit au moins un paramètre du véhicule ; et
▪ un élément de données connexe au niveau de batterie du véhicule ;

o enregistrer (403) le véhicule, par le biais du serveur distant (108), dans une base de données de véhicules stationnés ;
o calculer une séquence (406) de véhicules, dans laquelle la séquence de véhicules comprend une liste ordonnée de véhicules à partir de laquelle demander (407), du serveur distant (108) aux modules de commande respectifs (101), d'envoyer au moins un élément de données de véhicule, dans laquelle la séquence est calculée sur la base du niveau de batterie de véhicule ; dans laquelle, si le niveau de batterie de véhicule est inférieur à un seuil donné, le serveur distant (108) n'envoie pas d'instructions au module de commande (101) situé dans ce véhicule pour envoyer des éléments de données de véhicule ;

dans laquelle la séquence (406) de véhicules est mise à jour par le serveur distant (108) avec des informations envoyées par chaque véhicule au début du stationnement et à la fin du stationnement d'un véhicule.

2. Procédé de collecte de données de véhicule selon la revendication 1, **caractérisé en ce qu'**il comprend l'étape consistant à envoyer, par le biais du module de commande (101), au serveur distant (108), une typologie dudit au moins un capteur (106) et un état de fonctionnement dudit au moins un capteur (106), et l'étape consistant à vérifier (404), au moyen du serveur distant (108), la typologie dudit au moins un capteur (106), et l'état de fonctionnement dudit au moins un capteur (106).

3. Procédé de collecte de données de véhicule selon la revendication 1, **caractérisé en ce qu'**il comprend l'étape consistant à envoyer, par le biais du module de commande (101), au serveur distant (108), un état de fonctionnement dudit au moins un capteur (106), et l'étape consistant à vérifier (404), au moyen du serveur distant (108), l'état de fonctionnement dudit au moins un capteur (106).

4. Procédé de collecte de données de véhicule selon l'une quelconque des revendications 1 à 3, **caractérisé en ce qu'**il comprend l'étape consistant à comparer, par le biais du serveur distant (108), la position de véhicule reçue, à la position de la pluralité de véhicules dans la base de données de véhicules stationnés, et l'étape consistant à classer la pluralité de véhicules dans la base de données de véhicules stationnés, sur la base de leur position relative par rapport aux autres véhicules enregistrés dans la base de données.

5. Procédé de collecte de données de véhicule selon l'une quelconque des revendications 1 à 4, **caractérisé en ce qu'**il comprend l'étape consistant à collationner, par le biais du serveur distant (108), la position de véhicule détectée, avec un plan de zonage de places de stationnement, et l'étape consistant à classer la pluralité de véhicules, à partir de la base de données de véhicules stationnés, sur la base de la zone de stationnement.

6. Procédé de collecte de données de véhicule selon l'une quelconque des revendications 1 à 5, **caractérisé en ce qu'**il comprend l'étape consistant à demander (407), sur la base de la séquence calculée de véhicules, et par le biais du serveur distant (108), au module de commande (101) de chaque véhicule, d'envoyer au moins un élément de données, dans lequel ladite étape de demande (407) consiste à demander des données connexes à un ou plusieurs des éléments parmi :

   o un niveau de batterie de véhicule ;
   o une position du véhicule ;
   o une typologie dudit au moins un capteur (106) ;
   o un état de fonctionnement dudit au moins un capteur (106) ; et
   o une mesure prise par ledit au moins un capteur (106).

7. Procédé de collecte de données de véhicule selon la revendication 6, **caractérisé en ce que** la fréquence à laquelle des données sont demandées (407) au véhicule est égale au rapport entre une première quantité et une deuxième quantité.

8. Procédé de collecte de données de véhicule selon l'une quelconque des revendications 1 à 7, **caractérisé en ce qu'**il comprend l'étape consistant à envoyer, au serveur distant, à partir du module de commande (101) situé dans le véhicule et par l'intermédiaire d'un module de communication (105) connecté au module de commande (101) :

   ▪ un signal de désactivation, ledit signal de désactivation étant indicatif de la fin de stationnement du véhicule ;
   ▪ un élément de données connexe à un identifiant de véhicule ;
   ▪ la position du véhicule ; et
   ▪ ledit au moins un paramètre du véhicule.

9. Programme informatique **caractérisé en ce qu'**il comprend des instructions pour exécuter le procédé selon l'une quelconque des revendications 2 à 8.

10. Système de collecte de données de véhicule, comprenant :

   - un module de commande (101) ;
   - un module d'alimentation électrique (102), configuré de manière à se connecter à une batterie de véhicule ;
   - un module de positionnement (103) configuré de manière à déterminer une position du véhicule, connecté de manière bidirectionnelle au module de commande (101) ;
- un module de collecte de données (104), connecté de manière bidirectionnelle au module de commande (101) et connecté à au moins un capteur (106) configuré de manière à déterminer au moins un paramètre du véhicule ;
- un module de communication (105), connecté de manière bidirectionnelle au module de commande (101) ; et
- un serveur distant (108) ;
dans lequel le module d'alimentation électrique (102) est configuré de manière à fournir une alimentation électrique au module de commande (101), au module de positionnement (103), au module de communication (105), au module de collecte de données (104) et audit au moins un capteur (106) ;
dans lequel le module de commande (101) est configuré de manière à se connecter à un indicateur d'activation/désactivation du véhicule, dans lequel l'indicateur d'activation/désactivation est configuré de manière à générer et envoyer des signaux d'état d'activation/désactivation, au module de commande (101), sur la base, respectivement, du début de stationnement du véhicule et de la fin de stationnement du véhicule, dans lequel le module de communication (105) est configuré de manière à se connecter de manière bidirectionnelle au serveur distant (108) ;
dans lequel le module de commande (101) est configuré de manière à se connecter à la batterie de véhicule afin de mettre en oeuvre une lecture du niveau de batterie de véhicule ;
dans lequel le module de commande (101) est configuré de manière à :

o recevoir une demande visant à envoyer au moins un élément de données de véhicule à partir du serveur distant (108) par l'intermédiaire du module de communication (105) ; et
o envoyer, au serveur distant (108), par l'intermédiaire du module de communication (105), des données connexes à :

- une activation/désactivation de véhicule ;
- un identifiant de véhicule
- un positionnement de véhicule ; et
- des mesures prises par ledit au moins un capteur (106) ; et
- le niveau de batterie de véhicule ;

dans lequel l'étape d'envoi de données au serveur distant (108) est basée sur le signal d'état du début de stationnement du véhicule donné, et sur la demande reçue du serveur distant (108) visant à envoyer au moins un élément de données de véhicule ;
dans lequel la demande visant à envoyer au moins un élément de données de véhicule est générée sur la base de la séquence (406) de véhicules calculée conformément au procédé de collecte de données de véhicule selon l'une quelconque des revendications 1 à 8.

11. Système de collecte de données de véhicule selon la revendication 10, **caractérisé en ce que** le module d'alimentation électrique (102) est configuré de manière à :

o fournir en continu une alimentation électrique au module de commande (101) et au module de communication (105) ; et
o fournir une alimentation électrique au module de positionnement (103), au module de collecte de données (104) et audit au moins un capteur (106), uniquement sur instruction expresse du module de commande (101).

12. Système de collecte de données de véhicule selon l'une quelconque des revendications 10 et 11, **caractérisé en ce que** le serveur distant (108) est configuré de manière à collationner la position de véhicule détectée, avec un plan de zonage de places de stationnement, et à classer la pluralité de véhicules, à partir de la base de données de véhicules stationnés, sur la base de la zone de stationnement.

13. Système de collecte de données de véhicule selon l'une quelconque des revendications 10 à 12, **caractérisé en ce que** le module de commande (101) est configuré de manière à envoyer au serveur distant (108), par l'intermédiaire du module de communication, des données connexes à (105) :

o une typologie dudit au moins un capteur (106) ; et
o un état de fonctionnement dudit au moins un capteur (106).

FIG. 1

| ID | T | NOx |
|----|---|-----|
| 1 | ✓ | ✓ |
| 2 | ✓ | ✓ |
| 3 | x | ✓ |
| 4 | x | ✓ |

   <2h <1h

| ID | T | NOx |
|----|---|-----|
| 1 | ✓ | ✓ |
| 3 | x | ✓ |
| 2 | ✓ | ✓ |
| 4 | x | ✓ |

   <2h <1h

FIG. 2

FIG. 3

FIG. 4

**REFERENCES CITED IN THE DESCRIPTION**

**Patent documents cited in the description**

- US 2013151038 A1
- US 2004198466 A1
- US 2006052918 A1